# EUROPÄISCHE PATENTSCHRIFT

(11) **EP 2 350 996 B1**
(45) Veröffentlichungstag und Bekanntmachung des Hinweises auf die Patenterteilung: **24.10.2018**
(21) Anmeldenummer: 09782228.2
(22) Anmeldetag: 26.08.2009
(51) Int. Cl.: G08G 1/16

(54) **VERFAHREN ZUR AUSWAHL VON ZU ERGREIFENDEN SICHERHEITSMAßNAHMEN ZUR ERHÖHUNG EINER SICHERHEIT VON FAHRZEUGINSASSEN**
METHOD FOR SELECTING SAFETY MEASURES TO BE TAKEN TO INCREASE SAFETY OF VEHICLE OCCUPANTS
PROCÉDÉ DE SÉLECTION DE MESURES DE SÉCURITÉ À PRENDRE POUR AUGMENTER LA SÉCURITÉ D'OCCUPANTS D'UN VÉHICULE

(30) Priorität: 01.10.2008 DE 102008042518
(43) Veröffentlichungstag der Anmeldung: 03.08.2011
(73) Patentinhaber: Robert Bosch GmbH, 70442 Stuttgart (DE)
(72) Erfinder: FREIENSTEIN, Heiko, 71263 Weil Der Stadt (DE); WELLHOEFER, Matthias, 70499 Stuttgart (DE)
(86) Internationale Anmeldenummer: PCT/EP2009/061012
(87) Internationale Veröffentlichungsnummer: WO 2010/037600

(56) Entgegenhaltungen:
- WO-A-00/54008
- DE-A1- 10 328 256
- US-A1- 2002 022 927

## Beschreibung

### Stand der Technik

Die Erfindung geht aus von einem Verfahren und einer Steuereinrichtung nach Gattung der unabhängigen Ansprüche.

Aus der DE 10 2005 007466 A1 ist ein Notruf- und Warnsystem bekannt, bei welchem Warnmeldungen in Form von Textinformationen durch ein Satellitensystem an ein Fahrzeug zusammen mit Positionsdaten übermittelt werden. Hierbei ist es bekannt, dass zusätzlich übermittelte Daten Angaben über eine örtliche Relevanz der Textinformation beinhalten. Die Textinformationen werden in Abhängigkeit der Positionsdaten sowie der örtlichen Relevanz in einem Fahrzeug ausgegeben.

Aus dem Stand der Technik ist zudem die US 2002/0022927 A1 bekannt. Diese beschreibt ein GPS-basiertes Kollisionsvermeidungswarn- und -steuersystem für ein Fahrzeug und ein entsprechendes Verfahren. Weiterhin ist aus der WO 00/54008 ein Verfahren und eine Vorrichtung zum Verhindern von Unfällen bekannt. Schließlich beschreibt die DE 103 28 256 A1 ein Verfahren zur Warnung eines Führers eines Fahrzeugs bei einer Gefahrenmeldung über ein Navigationssystem sowie ein Navigationssystem mit einer Einrichtung zur Warnung.

### Offenbarung der Erfindung

Die Erfindung ist gegeben durch ein Verfahren nach Anspruch 1 und eine Steuereinrichtung nach Anspruch 4. Die abhängigen Ansprüche betreffen weitere vorteilhafte Ausgestaltungen der Erfindung.

### Vorteile der Erfindung

Das erfindungsgemäße Verfahren mit den Merkmalen des unabhängigen Anspruchs 1 hat demgegenüber den Vorteil, dass zu ergreifende Sicherheitsmaßnahmen zur Erhöhung einer Sicherheit von Fahrzeuginsassen eines Fahrzeugs in Bezug auf eine Gefährdung durch Umwelteinflüsse in Abhängigkeit einer Relevanz einer Gefährdung für das Fahrzeug ausgewählt und ergriffen werden, wobei eine Sicherheitsmaßnahme eine Ansteuerung eines Aktors in dem Fahrzeug umfasst. Dieses ist vorteilhaft, da hierdurch nicht nur Sicherheitsmaßnahmen ergriffen werden, bei welchen einem Fahrer Informationen zur eigenen Ergreifung einer Sicherheitsmaßnahme dargeboten werden, sondern eine Ansteuerung von Aktoren automatisch ergriffen wird Die Relevanz der Gefährdung wird hierbei anhand von empfangenen Positionsdaten des Fahrzeugs sowie von empfangenen Warnmeldungsdaten bestimmt.

Durch die in den abhängigen Ansprüchen aufgeführten Maßnahmen sind vorteilhafte Weiterbildungen und Verbesserungen des im unabhängigen Anspruch angegebenen Verfahrens möglich.

Gemäß einer weiteren Ausführungsform der Erfindung wird zusätzlich zu den Positionsdaten und den Warnmeldungsdaten anhand von durch mindestens eine Sensoreinheit des Fahrzeugs bereitgestellte Sensordaten auf die Relevanz der Gefährdung geschlossen. Dieses hat den Vorteil, dass durch Berücksichtigung der Sensordaten eine genauere Bestimmung einer Relevanz der Gefährdung erzielt wird.

Gemäß einer weiteren Ausführungsform der Erfindung weisen die Warnmeldungsdaten zusätzlich Klassifikationsdaten auf, anhand derer auf eine Art der Gefährdung geschlossen wird. Dieses ist vorteilhaft, da durch eine einfache Indikation der Art der Gefährdung anhand der Klassifikationsdaten bereits darauf hingewiesen wird, für welche Art von Gefährdung die Relevanz anhand von Sensordaten zu bestimmen ist. Hierdurch kann vorteilhaft in Abhängigkeit der Art der Gefährdung auf bestimmte Sensordaten zurückgegriffen werden, oder es können bestimmte Sensordaten ausgeschlossen werden, welche für eine Relevanzprüfung einer Gefährdung bei einer bestimmten Art von Gefährdung nicht von Bedeutung sind.

Gemäß einer weiteren Ausführungsform der Erfindung werden die Sicherheitsmaßnahmen in Abhängigkeit der Art der Gefährdung ausgewählt. Dieses ist vorteilhaft, da hierdurch solche Sicherheitsmaßnahmen ausgewählt werden, welche die Sicherheit der Fahrzeuginsassen bei einer bestimmten Art der Gefährdung erhöhen.

Gemäß einer weiteren Ausführungsform der Erfindung wird in Abhängigkeit der Relevanz entschieden, ob eine Sicherheitsmaßnahme ergriffen wird, welche eine Ansteuerung eines Aktors in dem Fahrzeug umfasst. Dieses ist vorteilhaft, da durch eine derartige Überprüfung, ob eine solche Sicherheitsmaßnahme ergriffen werden soll, bereits bei Betrachtung der Relevanz entschieden werden kann, ob solche Sicherheitsmaßnahmen notwendig sind.

Gemäß einer weiteren Ausführungsform der Erfindung erfolgt die Auswahl der Sicherheitsmaßnahmen unter Verwendung der Klassifikationsdaten und von durch eine Speichereinheit bereitgestellte Auswahldaten. Dieses ist vorteilhaft, da durch eine automatische Auswahl der Sicherheitsmaßnahmen anhand von Qualifikationsdaten und Auswahldaten, vorzugsweise Tabellen, die Sicherheitsmaßnahmen aus den Auswahldaten extrahiert werden können, ohne dass diese durch eine Datenübertragung an das Fahrzeug übermittelt werden müssen.

Gemäß einer weiteren Ausführungsform der Erfindung erfolgt die Auswahl der Sicherheitsmaßnahmen unter Verwendung von empfangenen Maßnahmendaten. Dieses ist vorteilhaft, da durch eine Übertragung von Maßnahmendaten, vorzugsweise anzuzeigende Daten für eine Anzeigeeinheit, derartige Sicherheitsmaßnahmen ergriffen werden können, welche sich auf Daten einer Zentrale oder einer Koordinierungsstelle beziehen.

Gemäß eines nebengeordneten Patentanspruchs 4 wird eine Steuereinrichtung zur Auswahl von zu ergreifenden Sicherheitsmaßnahmen zur Erhöhung einer Sicherheit von Fahrzeuginsassen eines Fahrzeugs in Bezug auf eine Gefährdung durch Umwelteinflüsse beansprucht. Die Steuereinrichtung weist eine erste Schnittstelle zum Empfangen von Warnmeldungsdaten auf, sowie eine zweite Schnittstelle zum Empfangen von Positionsdaten des Fahrzeugs. Ferner weist die Steuereinrichtung eine Recheneinheit auf, welche anhand der Positionsdaten und der Warnmeldungsdaten auf eine Relevanz der Gefährdung des Fahrzeugs schließt. Die Steuereinrichtung ist dadurch gekennzeichnet, dass die Recheneinheit in Abhängigkeit der Relevanz mindestens eine der Sicherheitsmaßnahmen derart ergreift, dass die Recheneinheit über eine dritte Schnittstelle einen Aktor ansteuert. Die Steuereinrichtung weist den Vorteil auf, dass durch Ansteuerung eines Aktors durch die Recheneinheit in Abhängigkeit der Relevanz der Gefährdung die Steuereinrichtung solche Maßnahmen ergreift, welche durch Änderung von Zuständen von Teilvorrichtungen eines Fahrzeugs die Sicherheit der Fahrzeuginsassen des Fahrzeugs erhöhen.

Gemäß einer weiteren Ausführungsform weist die Steuereinrichtung eine vierte Schnittstelle zu mindestens einer Sensoreinheit des Fahrzeugs auf. Hierbei schließt die Recheneinheit zusätzlich zu den Positionsdaten und den Warnmeldungsdaten anhand von durch die mindestens eine Sensoreinheit bereitgestellten Sensordaten auf die Relevanz der Gefährdung. Dieses ist vorteilhaft, da die Steuereinrichtung somit durch Berücksichtigung der bereitgestellten Sensordaten die Relevanz der Gefährdung sicherer und genauer bestimmen kann.

Gemäß eine weiteren Ausführungsform der Erfindung schließt die Recheneinheit anhand von in den Warnmeldungsdaten enthaltenen Klassifikationsdaten auf eine Art der Gefährdung. Dieses ist vorteilhaft, da die Recheneinheit anhand der Klassifikationsdaten auf besonders einfache Weise automatisch auf die Art der Gefährdung schließen kann.

### Kurze Beschreibung der Zeichnung

Ausführungsbeispiele der Erfindung sind in den Zeichnungen dargestellt und in der nachfolgenden Beschreibung näher erläutert.

### Es zeigen

Figur 1 ein Ablaufdiagramm des erfindungsgemäßen Verfahrens.
Figur 2 sowie 3 zeigen weitere Ausführungsformen des Verfahrens.
Figur 4 zeigt eine Ausführungsform eines erfindungsgemäßen Steuergerätes.

### Ausführungsformen der Erfindung

Das erfindungsgemäße Verfahren richtet sich auf eine Auswahl von zu ergreifenden Sicherheitsmaßnahmen zur Erhöhung einer Sicherheit von Fahrzeuginsassen eines Fahrzeugs in Bezug auf eine Gefährdung durch Umwelteinflüsse. Unter einer Gefährdung von Umwelteinflüssen kann hierunter beispielsweise ein Orkan, ein Hurrikan, ein Brand, ein Waldbrand, ein Erdbeben, ein Tsunami, ein Hagelsturm, eine Überschwemmung, eine Sturmflut, eine Lawine, eine Giftgaswolke oder ähnliche Gefährdung durch die Umwelt sein. Um auf eine Relevanz der Gefährdung für das Fahrzeug bzw. der Insassen des Fahrzeugs zu schließen werden erfindungsgemäß Positionsdaten und Warnmeldungsdaten verwendet. Die Positionsdaten werden beispielsweise von GPS-Satelliten oder ähnlichen Funkübertragungseinheiten empfangen. Die Warnmeldungsdaten werden beispielsweise von einer Zentrale über eine drahtlose Datenkommunikation empfangen. Zur drahtlosen Datenkommunikation eignen sich beispielsweise Übertragungsverfahren anhand von Satelliten, das GSM-Netz, das UMTS-Netz oder andere drahtlose Übertragungsnetze. Die Warnmeldungsdaten enthalten hierbei vorzugsweise Daten bezüglich einer Position einer Gefährdung, beispielsweise einer Position einer Giftgaswolke, oder über ein Gebiet, in welchem die Gefährdung präsent ist. Durch derartige Warnmeldungsdaten kann durch Vergleich der Warnmeldungsdaten mit den Positionsdaten des Fahrzeugs auf die Relevanz der Gefährdung derart geschlossen werden, dass entschieden wird, ob eine Gefährdung für das Fahrzeug vorliegt. Erfindungsgemäß wird in Abhängigkeit der Relevanz mindestens eine der Sicherheitsmaßnahmen ausgewählt und ergriffen, welche eine Ansteuerung eines Aktors in dem Fahrzeug umfasst. Nähert sich beispielsweise ein Fahrzeug einer Giftgaswolke, deren Position bzw. Ausbreitung durch Warnmeldungsdaten an das Fahrzeug bzw. eine Kommunikationseinheit übertragen wurde, so kann als Ansteuerung eines Aktors beispielsweise veranlasst werden, durch Fensterheber in dem Fahrzeug die Fenster des Fahrzeugs zu schließen. Eine weitere Maßnahme als eine Ansteuerung eines Aktors ist beispielsweise eine Ansteuerung der Belüftungsanlage bzw. Klimaanlage des Fahrzeugs, welche auf interne Luftzirkulation gestellt wird.

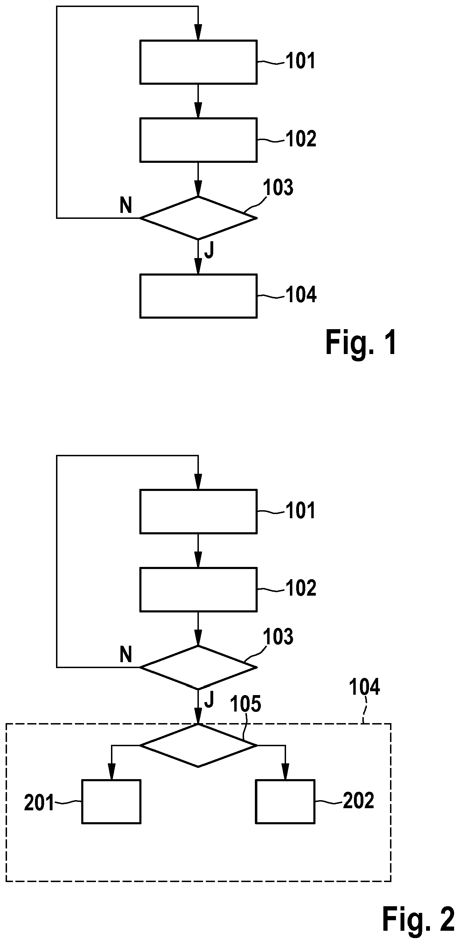

Abbildung 1 zeigt hierzu ein Ablaufdiagramm des erfindungsgemäßen Verfahrens. In einem ersten Verfahrensschritt 101 wird solange abgewartet, bis Warnmeldungsdaten empfangen werden. Nach dem Empfangen der Warnmeldungsdaten wird von dem ersten Verfahrensschritt 101 zu dem zweiten Verfahrenschritt 102 weitergeführt. In dem zweiten Verfahrensschritt 102 wird anhand von empfangenen Positionsdaten und den empfangenen Warnmeldungsdaten auf eine Relevanz der Gefährdung des Fahrzeugs bzw. der Fahrzeuginsassen geschlossen. Hier kann beispielsweise festgestellt werden, ob ein Fahrzeug sich in einem Gebiet befindet, in welchem eine Gefährdung durch Umwelteinflüsse vorliegt. Nach der Bestimmung der Relevanz wird von dem zweiten Verfahrensschritt 102 zu dem dritten Verfahrensschritt 103 weitergeführt, wobei in dem dritten Verfahrensschritt 103 in Abhängigkeit der Relevanz eine Verzweigung des Ablaufdiagramms zu unterschiedlichen, weiteren Verfahrensschritten vorgenommen wird. Hat die Prüfung der Relevanz ergeben, dass das Fahrzeug bzw. die Fahrzeuginsassen durch eine Gefährdung durch Umwelteinflüsse nicht gefährdet ist, da beispielsweise das Fahrzeug sich in einem ungefährdeten Gebiet befindet, so wird von dem dritten Verfahrensschritt 103 zurück verzweigt zu dem ersten Verfahrensschritt 101. In dem ersten Verfahrensschritt 101 wird wiederum solange verweilt, bis Warnmeldungsdaten empfangen werden. In dem Fall, dass das Verfahren sich in dem dritten Verfahrensschritt 103 befindet und ferner eine Relevanzüberprüfung ergibt, dass eine akute Gefährdung gegeben ist, wird von dem dritten Verfahrensschritt 103 zu dem vierten Verfahrensschritt 104 weiter verzweigt. In diesem vierten Verfahrensschritt 104 wird mindestens eine Sicherheitsmaßnahme ergriffen, welche eine Ansteuerung eines Aktors in dem Fahrzeug umfasst.

Vorzugsweise erfolgt die Bestimmung der Relevanz der Gefährdung zusätzlich dadurch, dass durch mindestens eine Sensoreinheit des Fahrzeugs bereitgestellte Sensordaten verwendet werden. Im Fall einer Giftgasgefährdung können hierbei beispielsweise Sensoren zur Messung des Sauerstoffgehaltes oder anderer Gase in der Umgebungsluft Sensordaten bereitstellen, anhand derer darauf geschlossen werden kann, ob eine Ansteuerung eines Aktors notwendig ist, beispielsweise in Form eines Fensterhebers zur Schließung des Fensters des Fahrzeugs. Eine solche Berücksichtigung von Sensordaten einer Sensoreinheit erfolgt ebenfalls in dem zweiten Verfahrensschritt 102.

Weitere Sensoren, welche zur Bestimmung einer Relevanz einer Gefährdung verwendet werden können, sind vorzugsweise Drucksensoren und/oder Temperatursensoren. Hierdurch ist es beispielsweise möglich, plötzliche Wetterumschwünge zu detektieren.

Zusätzlich weisen die Warnmeldungsdaten ferner Klassifikationsdaten auf, anhand derer auf eine Art der Gefährdung geschlossen wird. Somit werden vorzugsweise die Sicherheitsmaßnahmen in Abhängigkeit der Art der Gefährdung ausgewählt. Die Klassifikationsdaten können hierbei beispielsweise Daten sein, welche unterschiedliche Klassen von Gefährdungen anzeigen. Eine erste Klasse von Gefährdung kann beispielsweise eine starke Bewegung von Luftmassen sein. Dieses kann beispielsweise ein Orkan, eine Windhose, ein Hurrikan oder ein starkes Unwetter sein. Eine weitere Klasse von Gefährdung kann beispielsweise eine Brandgefährdung sein in Form eines Flächenbrandes, eines Waldbrandes oder eines Brandes von Industriegebäuden. Eine nächste Klasse von Gefährdung kann beispielsweise eine Verschiebung von Erdmassen sein, beispielsweise ein Erdbeben. Eine weitere Klasse von Gefährdung kann beispielsweise eine Gefährdung durch Wassermassen sein, in Form von eines Tsunami, einer Springflut, einer Sturmflut oder einer anderen Form von Überschwemmung. Eine weitere Klasse von Gefährdung kann beispielsweise durch Schneemassen gegeben sein, vorzugsweise durch eine Lawine. Eine nächste Klasse von Gefährdung kann beispielsweise eine Umweltkatastrophe in Form von giftigen Gasen oder einer radioaktiven Wolke sein.

Hierzu ist in Figur 2 ein Ablaufdiagramm dargestellt. Das Ablaufdiagramm in Figur 2 enthält sämtliche Elemente, welche in Figur 1 enthalten sind unter Verwendung der gleichen Bezugszeichen. In Figur 2 ist ferner der vierte Verfahrensschritt 104 näher spezifiziert. Hierbei weist dieser vierte Verfahrensschritt 104 einen fünften Verfahrensschritt 105 auf, in welchem die Klassifikationsdaten ausgewertet werden, so dass in Abhängigkeit der Art der Gefährdung entweder eine erste Maßnahme 202 oder eine zweite Maßnahme 202 ausgewählt wird. Wird also anhand der Klassifikationsdaten angezeigt, welche Art der Gefährdung vorliegt, so kann hieraus besonders einfach in dem fünften Verfahrensschritt 105 entschieden werden, welche Art von Sicherheitsmaßnahmen bei der gegebenen Art der Gefährdung die Sicherheit des Fahrzeugs bzw. der Fahrzeuginsassen erhöht.

Gemäß einer weiteren Ausführungsform der Erfindung wird in Abhängigkeit der Relevanz der Gefährdung entschieden, ob eine der Sicherheitsmaßnahmen ergriffen wird, welche eine Ansteuerung eines Aktors in dem Fahrzeug umfasst.

Hierbei kann beispielsweise entschieden werden, ob eine einfache Ausgabe von Sicherheitshinweisen über eine Anzeigeeinheit ausreicht, sodass ein Fahrer selber eine Erhöhung der Sicherheit des Fahrzeugs durch eine entsprechende Führung des Fahrzeug herbeiführen kann, oder ob tatsächlich eine Ansteuerung eines Aktors notwendig ist. Hierdurch ergibt sich ein zweistufiges Verfahren, bei welchem in einer ersten Stufe lediglich Informationen ausgegeben werden, und bei dem in einer anderen, zweiten Stufe sowohl Informationen bzw. Warnhinweise ausgegeben werden als auch Aktoren in dem Fahrzeug angesteuert werden. Wird also in Abhängigkeit der Relevanz der Gefährdung darauf geschlossen, dass eine Ansteuerung eines Aktors notwendig ist, so wird die zweite Stufe gewählt.

Vorzugsweise werden unter Verwendung der Klassifikationsdaten von durch eine Speichereinheit bereitgestellte Auswahldaten die Sicherheitsmaßnahmen ausgewählt. Hierbei können beispielsweise in einer Speichereinheit bereits anzuzeigende Warnhinweise oder auch Tabellen von Sicherheitsmaßnahmen zur Ansteuerung von Aktoren für bestimmte Klassen von Gefährdungen abgelegt sein. Die auszugebenden Hinweise müssen somit nicht notwendigerweise über eine Funkübertragung übertragen und empfangen werden, sondern können direkt aus der Speichereinheit in Abhängigkeit der Klassifikationsdaten ausgelesen werden. Ebenso können bereits nach Ausfwertung der Klassifikationsdaten umgehend anhand der Auswahldaten solche Sicherheitsmaßnahmen ausgewählt und ergriffen werden, welche in den Auswahldaten für eine bestimmte Klasse von Gefährdung festgelegt sind.

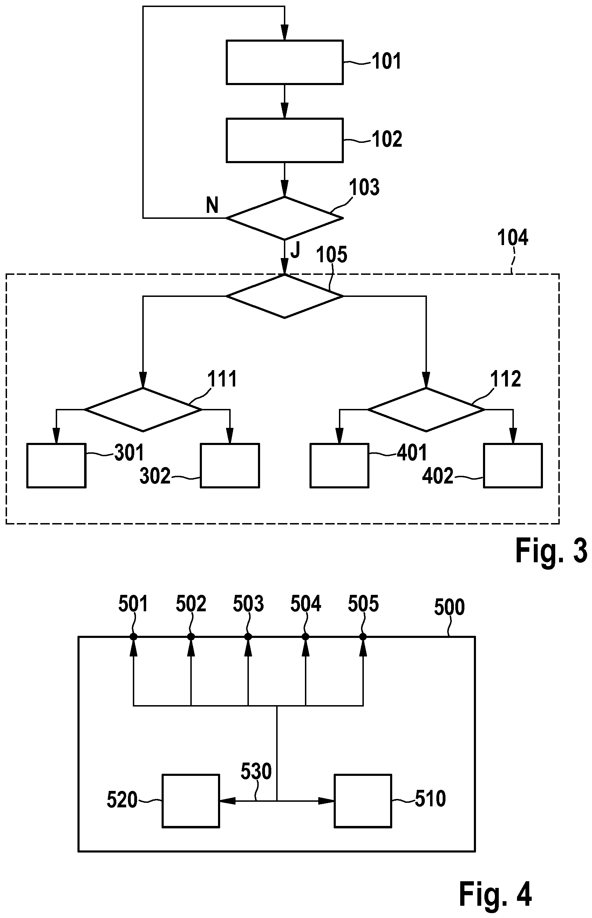

Figur 3 zeigt ein Ausführungsbeispiel des erfindungsgemäßen Verfahrens unter einer Verwendung eines zweistufigen Warnkonzeptes. Hierbei weist Figur 3 alle Elemente des Ablaufdiagramms von Figur 1 unter Verwendung der gleichen Bezugszeichen auf. Ferner ist in der Figur 3 der vierte Verfahrensschritt 104 näher spezifiziert. Der vierte Verfahrensschritt 104 weist den fünften Verfahrensschritt 105 auf, in welchem in Abhängigkeit der Klassifikationsdaten auf die Art der Gefährdung geschlossen wird. In Abhängigkeit der Art der Gefährdung wird von dem fünften Verfahrensschritt entweder zu einer ersten Stufenentscheidung 111 für eine erste Klasse von Gefährdung oder zu einer zweiten Stufenentscheidung 112 für eine zweite Klasse von Gefährdung verzweigt. Je nach zu berücksichtigender Klasse von Gefährdung ist hierbei eine jeweilige Stufenentscheidung vorzusehen. Gemäß des Ausführungsbeispiels in Figur 3 ist eine Unterscheidung in zwei Klassen von Gefährdung möglich. In der ersten Stufenentscheidung wird für die erste Art von Gefährdung in Abhängigkeit der Relevanz der Gefährdung entschieden, ob entweder zu einer ersten Maßnahmenstufe 301 oder zu einer zweiten Maßnahmenstufe 302 verzweigt wird. Zur ersten Maßnahmenstufe 301 wird dann weiter verzweigt, wenn eine Ausgabe von Warnhinweisen an den Fahrer ausreichend ist. Somit erfolgt in der ersten Maßnahmenstufe 301 lediglich eine Ausgabe von Warnhinweisen an den Fahrer. Wird jedoch an der ersten Stufenentscheidung 111 entschieden, dass es notwendig ist, Sicherheitsmaßnahmen zu ergreifen, welche eine Ansteuerung eines Aktors in dem Fahrzeug umfassen, so wird von der ersten Stufenentscheidung 111 zu der zweiten Maßnahmenstufe 302 weiter verzweigt. Hierbei umfasst die zweite Maßnahmenstufe 302 entweder nur eine Ansteuerung eines Aktors in dem Fahrzeug oder auch zusätzlich eine Ausgabe von Warnhinweisen. Wurde in dem fünften Verfahrensschritt 105 entschieden, dass eine zweite Klasse von Gefährdung vorliegt, so wird zu der zweiten Stufenentscheidung 112 weiter verzweigt. In der zweiten Stufenentscheidung 112 wird die Relevanz der Gefährdung der zweiten Klasse von Gefährdung zu der Entscheidung herangezogen, ob zu einer dritten Maßnahmenstufe 401 oder einer vierten Maßnahmenstufe 402 weiterverzweigt wird. Wird aufgrund der bestimmten Relevanz der Gefährdung festgestellt, dass eine einfache Ausgabe von Warnhinweisen genügt, so wird zu der dritten Maßnahmenstufe 401 weiterverzweigt. Wird in der zweiten Stufenentscheidung 112 entschieden, dass aufgrund der Relevanz der Gefährdung ein Ergreifen von Sicherheitsmaßnahmen notwendig ist, bei welchem Aktoren in dem Fahrzeug angesteuert werden, so wird zu der vierten Maßnahmenstufe 402 weiter verzweigt. Vorzugsweise erfolgt die Auswahl der Sicherheitsmaßnahmen unter Verwendung von empfangenen Maßnahmendaten. Hierbei kann es sich bei den empfangenen Maßnahmendaten beispielsweise um Warnhinweise oder Anweisungen an einen Fahrer halten, welche von einer Koordinierungszentrale ausgesendet werden. Hierdurch kann durch eine Koordinierungszentrale oder ein Katastrophenzentrum anhand der Maßnahmendaten vorgegeben werden, welche Art von Hinweisen oder Warnanweisungen an das Fahrzeug übertragen werden und zu einer bestimmten Art von Warnhinweisen bzw. Informationen führen.

Im Folgenden werden unterschiedliche Klassen von Gefahren mit entsprechenden Sicherheitsmaßnahmen, welche Ansteuerungen von Aktoren umfassen, aufgeführt:
Im Falle einer Gefährdung durch einen Orkan, eine Windhose, eine Hurrikan oder ein starkes Unwetter können vorzugsweise Sensordaten von Sensoreinheiten in Form von Drehratensensoren aber auch Low-G-Beschleunigungssensoren verwendet werden. Hierdurch kann überwacht werden, ob es zu einem Aufschaukeln eines Fahrzeugs kommt. Ferner ist es möglich, dass Sensoreinheiten in Form von Videosensoren verwendet werden, so dass über eine Bilderkennung eine Präsenz der Gefährdung bestimmt werden kann. Warnhinweise, welche über Anzeigeeinheiten oder in anderer Form ausgegeben werden, können beispielsweise Fahranweisungen an den Fahrer in der Form sein, dass der Fahrer angehalten wird möglichst langsam zu fahren oder das Fahrzeug abzustellen. Weitere Formen von Warnhinweisen sind möglich. Als Form von Ansteuerungen von Aktoren für derartige Gefährdungen, wird beispielsweise bei Cabriolets der Überrollschutz bzw. Überrollbügel aktiviert, um in dem Fall, dass Gegenstände auf das Fahrzeug fallen, diese von Fahrzeuginsassen fernzuhalten. Eine weitere Ansteuerung eines Aktors kann beispielsweise eine Deaktivierung der Zentralverriegelung sein, um im Falle einer Bergung von Fahrzeuginsassen den Rettungskräften das Öffnen der Türen zu ermöglichen.

Im Falle einer Klasse von Gefährdung durch Brandgefährdung, beispielsweise Flächenbrand oder Waldbrand, kann beispielsweise durch Sensoren festgestellt werden, ob der Kohlendioxidgehalt in der Umgebungsluft einen kritischen Wert übersteigt. Eine Ansteuerung eines Aktors kann hierbei beispielsweise ein Umstellen der Klimaanlage bzw. der Lüftungsanlage auf eine interne Luftzirkulation sein, um das Eintreten von Gasen in das Fahrzeug zu unterbinden.

Im Falle einer Gefährdung durch ein Erdbeben als eine weitere Klasse von Gefährdung kann beispielsweise durch Bewegungs- oder Beschleunigungssensoren festgestellt werden, ob das Fahrzeug bestimmten Rüttelbewegungen unterworfen wird. Eine Ansteuerung von Aktoren kann hierbei vorzugsweise das Schließen der Fenster, das Schließen eines Cabrioletdachs, das Aufstellen eines Überrollbügels oder das Betätigen von automatischen Kopfstützen sein.

Im Falle einer Hagelwarnung kann beispielsweise eine Ansteuerung eines Aktors ein automatisches Schließen des Daches und der Fenster umfassen.

Im Falle von einer Klasse von Gefährdung durch Giftgase oder radioaktive Luftmassen kann vorzugsweise eine Ansteuerung von Aktoren ein automatisches Schließen eines Daches oder von Fenstern sein, oder auch ein Umstellen der Klimaanlage auf interne Luftzirkulation.

Weitere Ausführungsformen der Erfindung durch eine Kombination von zuvor genannten Ausführungsformen sind zur Erlangung weiterer Vorteile ebenfalls möglich.

Wird durch eine Ausführungsform des erfindungsgemäßen Verfahrens festgestellt, dass eine Relevanz der Gefährdung des Fahrzeugs derart ist, dass Aktoren in dem Fahrzeug angesteuert werden sollen, so kann vorzugsweise im Anschluss an die Ansteuerung der Aktoren eine Aussendung von Daten von dem Fahrzeug an andere Fahrzeuge oder an eine Zentrale erfolgen, wobei die ausgesendeten Daten eine Warnung, eine Angabe über die Gefährdung und/oder eine Position des Fahrzeugs umfassen.

Figur 4 zeigt ein erfindungsgemäßes Steuergerät zur Auswahl von zu ergreifenden Sicherheitsmaßnahmen zur Erhöhung einer Sicherheit von Fahrzeuginsassen eines Fahrzeugs. Das Steuergerät 500 weist eine erste Schnittstelle 101 zum Empfangen von Warnmeldungsdaten sowie eine zweite Schnittstelle 502 zum Empfangen von Positionsdaten des Fahrzeugs auf. Das Steuergerät 500 weist ferner eine Recheneinheit 510 auf, welche anhand der empfangenen Positionsdaten und der empfangenen Warnmeldungsdaten auf eine Relevanz der Gefährdung des Fahrzeugs schließt. Vorzugsweise sind die Schnittstellen 501, 502 und die Recheneinheit 510 miteinander über ein Datenbussystem 530 miteinander verbunden, beispielsweise über einen internen Datenbus eines Rechnersystems. Das erfindungsgemäße Steuergerät ist dadurch gekennzeichnet, dass die Recheneinheit 510 in Abhängigkeit der Relevanz mindestens eine der Sicherheitsmaßnahmen derart ergreift, dass die Recheneinheit über eine dritte Schnittstelle 503 einen Aktor ansteuert. Hierbei ist auch vorzugsweise die dritte Schnittstelle 503 an dem internen Bussystem 530 der Steuereinrichtung 500 angebunden. Gemäß einer weiteren Ausführungsform der Erfindung weist die Steuereinrichtung 500 eine vierte Schnittstelle 504 auf, über welche die Steuereinrichtung 500 mit mindestens einer Sensoreinheit verbunden ist. Die Recheneinheit 510 schließt zusätzlich zu den Positionsdaten und den Warnmeldungsdaten anhand von durch die mindestens eine Sensoreinheit bereitgestellten Sensordaten auf die Relevanz der Gefährdung.

Vorzugsweise schließt die Recheneinheit 510 anhand von in den Warnmeldungsdaten enthaltenen Klassifikationsdaten auf eine Art der Gefährdung. Vorzugsweise weist die Steuereinrichtung 500 ferner eine Speichereinheit 520 auf, in welcher vorzugsweise Sicherheitsmaßnahmen abgespeichert sind und von der Recheneinheit 510 aufgerufen werden können. Ferner sind in der Speichereinheit 520 vorzugsweise Daten abgespeichert, anhand derer unter Verwendung der Klassifikationsdaten entschieden werden kann, welche Art von Maßnahmen für welche Art Klasse von Gefährdung zu ergreifen sind.

## Patentansprüche

1. Verfahren zur Auswahl von zu ergreifenden Sicherheitsmaßnahmen zur Erhöhung einer Sicherheit von Fahrzeuginsassen eines Fahrzeugs in Bezug auf eine Gefährdung durch Umwelteinflüsse, mit den Schritten:
- Empfangen von Positionsdaten des Fahrzeugs,
- Empfangen von Warnmeldungsdaten (101), die Daten bezüglich einer Position der Gefahrdung durch Umwelteinflüsse enthalten, **gekennzeichnet durch**:
- Schließen auf eine Art der Gefährdung anhand von in den Warnmeldungsdaten enthaltener Klassifikationsdaten, wobei die Klassifikationsdaten Daten sind, die unterschiedliche Klassen von Gefährdungen anzeigen,
- Schließen auf eine Relevanz der Gefährdung für das Fahrzeug (102) durch Vergleich der Warnmeldungsdaten mit den Positionsdaten des Fahrzeugs (103),
- Schließen auf die Relevanz der Gefährdung zusätzlich anhand von durch mindestens eine Sensoreinheit bereitgestellten Sensordaten, wobei in Abhängigkeit von der Art der Gefährdung auf bestimmte Sensordaten zurückgegriffen wird, die für die anhand der Klassifikationsdaten ermittelte Art der Gefährdung relevant sind,
- Auswählen und Ergreifen mindestens einer der Sicherheitsmaßnahmen in Abhängigkeit von der Relevanz, falls aus der anhand des Vergleichs und der Sensordaten ermittelten Relevanz auf eine Gefährdung des Fahrzeugs oder eines Fahrzeuginsassen geschlossen wird, wobei die Sicherheitsmaßnahmen eine Ansteuerung eines Aktors in dem Fahrzeug umfassen (104), wobei
- wenigstens eine der folgenden Sicherheitsmaßnahmen ausgewählt wird:
- Schließen von Fenstern des Fahrzeugs,
- Aufstellen eines Überrollbügels,
- Schließen eines Cabrioletdachs,
- Stellen einer Belüftungsanlage oder Klimaanlage auf interne Luftzirkulation.

2. Verfahren nach Anspruch 1, **dadurch gekennzeichnet, dass** die Auswahl der Sicherheitsmaßnahmen unter Verwendung der Klassifikationsdaten und von durch eine Speichereinheit (520) bereitgestellte Auswahldaten erfolgt.

3. Verfahren nach einem der vorhergehenden Ansprüche, **dadurch gekennzeichnet, dass** die Auswahl der Sicherheitsmaßnahmen unter Verwendung von empfangenen Maßnahmendaten erfolgt.

4. Steuereinrichtung (500) zur Auswahl von zu ergreifenden Sicherheitsmaßnahmen zur Erhöhung einer Sicherheit von Fahrzeuginsassen eines Fahrzeugs in Bezug auf eine Gefährdung durch Umwelteinflüsse, mit
- einer ersten Schnittstelle (501) zum Empfangen von Warnmeldungsdaten, die Daten bezüglich einer Position der Gefährdung durch Umwelteinflüsse enthalten,
- einer zweiten Schnittstelle (501) zum Empfangen von Positionsdaten des Fahrzeugs,
- einer dritten Schnittstelle (503) zum Ansteuern eines Aktuators,
- einer vierten Schnittstelle (504), über die die Steuereinrichtung (500) mit mindestens einer Sensoreinheit verbunden ist, die Sensordaten bereitstellt,
- einer Recheneinheit (510), die dazu eingerichtet ist,
- anhand der Positionsdaten und der Warnmeldungsdaten auf eine Relevanz der Gefährdung des Fahrzeugs zu schließen, und weiters gekennzeichnet ist,
- auf die Relevanz der Gefährdung zusätzlich anhand von durch die mindestens eine Sensoreinheit bereitgestellten Sensordaten zu schließen, wobei in Abhängigkeit von der Art der Gefährdung auf bestimmte Sensordaten zurückgegriffen wird, die für die anhand der Klassifikationsdaten ermittelte Art der Gefährdung relevant sind, und
- in Abhängigkeit von der Relevanz mindestens eine der Sicherheitsmaßnahmen zu ergreifen, falls aus der anhand des Vergleichs und der Sensordaten ermittelten Relevanz auf eine Gefährdung des Fahrzeugs oder eines Fahrzeuginsassen geschlossen wird, wobei die Sicherheitsmaßnahmen die Ansteuerung des Aktors in dem Fahrzeug umfassen, wobei
- wenigstens eine der folgenden Sicherheitsmaßnahmen ausgewählt wird:
- Schließen von Fenstern des Fahrzeugs,
- Aufstellen eines Überrollbügels,
- Schließen eines Cabrioletdachs,
- Stellen einer Belüftungsanlage oder Klimaanlage auf interne Luftzirkulation.

## Claims

1. Method for selecting safety measures to be taken to increase the safety of vehicle occupants of a vehicle with respect to a hazard presented by environmental influences, comprising the steps:
- receiving positional data of the vehicle,
- receiving warning message data (101) which contain data relating to a position of the hazard presented by environmental influences, **characterized by**:
- inferring the type of hazard on the basis of classification data contained in the warning message data, wherein the classification data are data which indicate different classes of hazards,
- inferring the relevance of the hazard for the vehicle (102) by comparing the warning message data with the position data of the vehicle (103),
- inferring the relevance of the hazard additionally on the basis of sensor data which is made available by at least one sensor unit, wherein specific sensor data which are relevant for the type of hazard determined on the basis of the classification data are accessed as a function of the type of hazard,
- selecting and taking at least one of the safety measures as a function of the relevance if a hazard presented to the vehicle or a vehicle occupant is inferred from the relevance determined on the basis of the comparison and the sensor data, wherein the safety measures comprise (104) actuating an actuator in the vehicle, wherein
- at least one of the following safety measures is selected:
- closing windows of the vehicle,
- extending a rollover bar,
- closing a convertible roof, and
- setting a ventilation system or air-conditioning system to internal air circulation.

2. Method according to Claim 1, **characterized in that** the selection of the safety measures is made using the classification data and selection data made available by a memory unit (520).

3. Method according to one of the preceding claims, **characterized in that** the selection of the safety measures is made using received measure data.

4. Control device (500) for selecting safety measures to be taken to increase the safety of vehicle occupants of a vehicle with respect to a hazard presented by environmental influences, having
- a first interface (501) for receiving warning message data which contain data relating to a position of the hazard presented by environmental influences,
- a second interface (501) for receiving position data of the vehicle,
- a third interface (503) for actuating an actuator,
- a fourth interface (504) by means of which the control device (500) is connected to at least one sensor unit which makes available sensor data,
- a computing unit (510) which is configured
- to infer a relevance of the hazard of the vehicle on the basis of the position data and the warning message data and is also characterized
- to infer the relevance of the hazard additionally on the basis of sensor data which are made available by the at least one sensor unit, wherein specific sensor data which are relevant for the type of hazard determined on the basis of the classification data are accessed as a function of the type of hazard,
- to take at least one of the safety measures as a function of the relevance if a hazard presented to the vehicle is inferred from the relevance determined on the basis of the comparison and the sensor data, wherein the safety measures comprise the actuation of the actuator in the vehicle, wherein
- at least one of the following safety measures is selected:
- closing windows of the vehicle,
- extending a rollover bar,
- closing a convertible roof,
- setting a ventilation system or air-conditioning system to internal air circulation.

## Revendications

1. Procédé de sélection de mesures de sécurité à prendre pour augmenter la sécurité des passagers d'un véhicule vis-à-vis d'un danger lié à l'environnement, comprenant les étapes consistant à :
- recevoir des données de position du véhicule,
- recevoir des données de message d'avertissement (101) qui contiennent des données relatives à une position du danger lié à l'environnement, **caractérisé en ce qu'**il consiste à :
- établir un type de danger sur la base de données de classification contenues dans les données de message d'avertissement, dans lequel les données de classification sont des données qui indiquent différentes classes de dangers,
- établir une pertinence du danger pour le véhicule (102) en comparant les données de message d'avertissement aux données de position du véhicule (103),
- établir en outre la pertinence du danger sur la base de données de capteurs fournies par au moins une unité à capteurs, dans lequel des données de capteurs déterminées qui sont pertinentes pour le type de danger déterminé sur la base des données de classification sont utilisées en fonction du type de danger,
- sélectionner et retenir au moins l'une des mesures de sécurité en fonction de la pertinence s'il est établi à partir de la pertinence déterminée sur la base de la comparaison et des données de capteurs qu'il existe un danger pour le véhicule ou un passager du véhicule, dans lequel les mesures de sécurité comprennent la commande d'un actionneur dans le véhicule (104), dans lequel
- au moins l'une des mesures de sécurité suivantes est sélectionnée :
- fermeture de vitres du véhicule,
- mise en place d'un arceau de sécurité,
- fermeture d'un toit convertible,
- réglage d'un système de ventilation ou d'un système de climatisation sur la circulation d'air interne.

2. Procédé selon la revendication 1, **caractérisé en ce que** la sélection des mesures de sécurité est effectuée par utilisation des données de classification et des données de sélection fournies par une unité de stockage (520).

3. Procédé selon l'une des revendications précédentes, **caractérisée en ce que** la sélection des mesures de sécurité est effectuée par utilisation des données de mesures reçues.

4. Dispositif de commande (500) destiné à sélectionner des mesures de sécurité à prendre pour augmenter la sécurité des passagers d'un véhicule vis-à-vis d'un danger lié à l'environnement, comportant
- une première interface (501) destinée à recevoir des données de message d'avertissement contenant des données relatives à une position du danger lié à l'environnement,
- une deuxième interface (501) destinée à recevoir des données de position du véhicule,
- une troisième interface (503) destinée commander un actionneur,
- une quatrième interface (504) par l'intermédiaire de laquelle le dispositif de commande (500) est relié à au moins une unité à capteurs fournissant des données de capteurs,
- une unité de calcul (510) qui est conçue pour,
- établir, sur la base des données de position et des données de message d'avertissement, une pertinence du danger pour le véhicule, et **caractérisé en outre par** le fait
- d'établir la pertinence du danger sur la base des données de capteurs fournies par l'au moins une unité à capteurs, dans lequel des données de capteurs déterminées qui sont pertinentes pour le type de danger déterminé sur la base des données de classification sont utilisées en fonction du type de danger, et
- de prendre au moins l'une des mesures de sécurité en fonction de la pertinence s'il est établi à partir de la pertinence déterminée sur la base de la comparaison et des données des capteurs qu'il existe un danger pour le véhicule ou un passager du véhicule, dans lequel les mesures de sécurité comprennent la commande de l'actionneur dans le véhicule, dans lequel
- au moins l'une des mesures de sécurité suivantes est sélectionnée :
- fermeture de vitres du véhicule,
- mise en place d'un arceau de sécurité,
- fermeture d'un toit convertible,
- réglage d'un système de ventilation ou d'un système de climatisation sur la circulation d'air interne.
